# FASCICULE DE BREVET EUROPEEN

(11) **EP 1 231 388 B1**
(45) Date de publication et mention de la délivrance du brevet: **27.10.2004**
(21) Numéro de dépôt: 02010783.5
(22) Date de dépôt: 08.09.1998
(51) Int. Cl.: F16B 21/20

(54) **Organe cylindrique muni d'un dispositif de retenue axiale dudit organe dans un alésage cylindrique d'un support**
Zylindrisches Bauteil mit einem Element zum axialen Festhalten desselben in einer zylindrischen Bohrung eines Trägers
Cylindrical element with a device for axially maintaining it within a cylindrical bore of a support

(30) Priorité: 12.09.1997 FR 9711382
(43) Date de publication de la demande: 14.08.2002
(62) Demande divisionnaire de: 98943942.7
(73) Titulaire: MAGNETI MARELLI FRANCE, F-92000 Nanterre (FR)
(72) Inventeur: Joigneau, Jean-Pierre, 78580 Maule (FR)
(74) Mandataire: Bérogin, Francis

(56) Documents cités:
- FR-A- 2 102 518
- FR-A- 2 664 337
- US-A- 3 779 659
- US-A- 5 014 037

## Description

La présente invention est relative à un organe cylindrique muni d'un dispositif de retenue axiale dudit organe destiné à être engagé dans un alésage d'un support, l'organe comprenant au moins une portée de guidage destinée à coopérer avec au moins un étage de l'alésage du support pour immobiliser transversalement l'organe dans le support.

On connait, notamment d'après FR-A-2 102 518, un organe de ce type muni d'une bague de retenue axiale qui comprend une âme et des dents de retenue, l'âme étant montée solidaire de l'organe et les dents, venues de matière avec l'âme, étant inscrites dans un cône convergent dans le sens d'engagement de l'organe dans le support et étant destinées à venir en appui élastique dans un étage de l'alésage afin d'immobiliser axialement l'organe dans le support et inhiber tout mouvement de l'organe dans un sens contraire au sens d'engagement, l'âme portant plusieurs dents reliées les unes aux autres.

L'invention trouve, notamnent, mais non exclusivement, son application dans la fixation d'un moteur électrique pas à pas ou d'un potentiomètre dans un alésage d'un corps papillon de moteur de véhicule automobile. Il est en particulier nécessaire qu'un arbre du moteur pas à pas ou du potentiomètre soit immobilisé transversalement et axialement par rapport au support.

On a déjà proposé de nombreux dispositifs de fixation d'un arbre dans un alésage d'un support associé. Toutefois, les dispositions connues exigent toutes une structure assez complexe disposée soit sur le support, soit sur le boîtier du moteur pas à pas ou du potentiomètre.

La présente invention a pour but de proposer de nouveaux moyens d'immobilisation axiale dudit arbre tout en simplifiant les structures connues et ce, par des moyens simples, efficaces et peu coûteux.

L'organe suivant l'invention peut éventuellement comporter en outre une ou plusieurs des caractéristiques des revendications dépendantes.

Un exemple de réalisation de l'invention va maintenant être décrit en regard des dessins annexés sur lesquels :

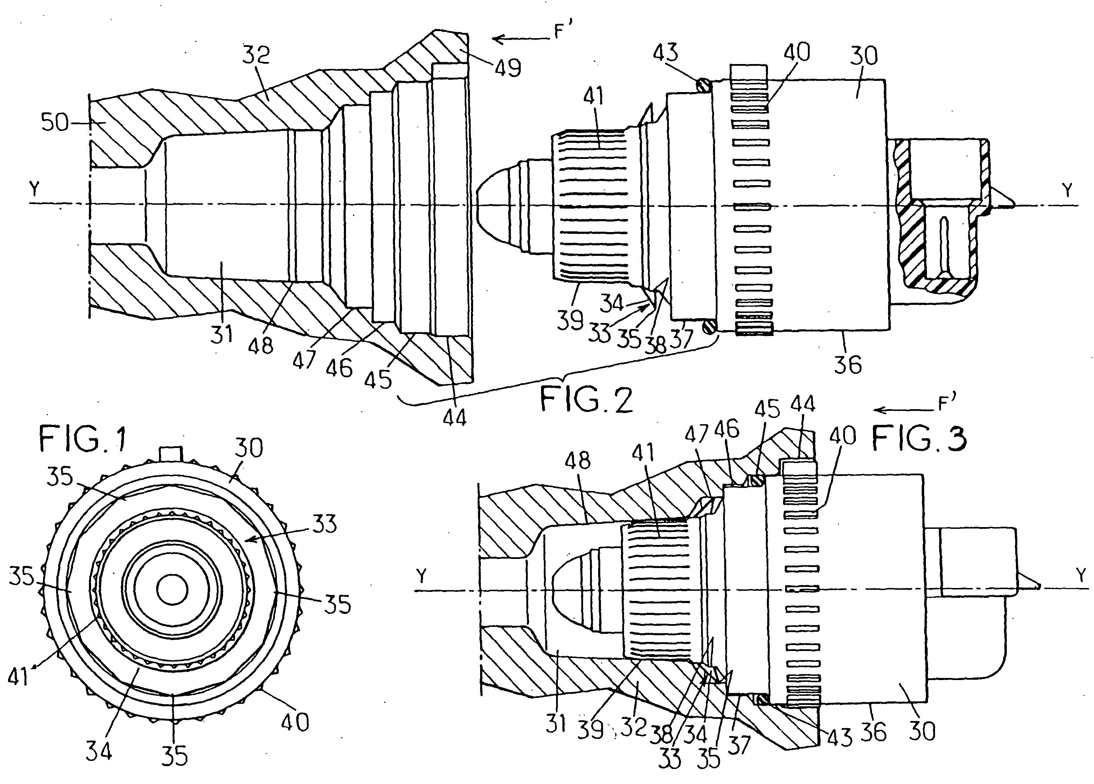

- la figure 1 est une vue de face d'un organe muni d'un mode de réalisation d'un dispositif de retenue axiale suivant la présente invention ;
- la figure 2 est une vue de côté et en coupe de l'organe de la figure 1 destiné à être inséré dans son support ; et
- la figure 3 est une vue de côté de l'organe des figures 1 et 2 immobilisé dans son support.

Le dispositif suivant la présente invention est destiné à retenir axialement un organe 30 tel qu'un boîtier d'un moteur électrique pas à pas dans un alésage 31 d'un support 32, l'ensemble de ces éléments étant cylindriques de révolution et de même axe Y-Y.

Le dispositif de retenue axiale est une bague 33 qui comprend une âme 34 et des dents de retenue 35.

Les dents 35 sont venues de matière avec l'âme 34 qui a la forme d'un tronc de cône lui-même convergent dans le sens F' d'engagement du moteur électrique 30 dans l'alésage 31 du support 32.

Plus particulièrement, les dents 35 sont reliées les unes aux autres et sont situées dans le tronc de cône défini par l'âme 34. Ainsi, le contour de l'ensemble des dents 35 est de forme sensiblement polygonale dont les sommets sont saillants vers l'extérieur.

Le boîtier 30 du moteur électrique pas à pas est un boîtier étagé, à quatre étages 36 à 39 de diamètres successivement décroissants dans le sens d'engagement F'. L'âme 34 est emmanchée à force sur le troisième étage 38.

Le premier étage 36 et le quatrième étage 39 portent extérieurement des dents d'accrochage 40 et 41 destinées à coopérer avec l'alésage 31 du support 32.

Le deuxième étage 37 du boîtier 30 supporte un joint torique 43 destiné à assurer l'étanchéité du boîtier dans l'alésage après mise en place de ce boîtier dans l'alésage.

L'alésage 31 est un alésage étagé à cinq étages 44 à 48 à diamètres successivement décroissants depuis l'extrémité d'entrée 49 du support 32 jusqu'au fond 50 de ce support.

Lors de l'insertion du boîtier 30 dans son support 32, les dents 40 et 41 coopèrent à frottement avec les premier 44 et cinquième 48 étages du support. Le joint torique 43 est écrasé contre le deuxième étage 45 tandis que les dents 35 de la bague 33 sont rabattues élastiquement en direction de l'axe Y-Y en venant frotter contre le quatrième étage 47.

La coopération des portées de guidage du boîtier 30 avec les étages du support 32 immobilise transversalement ce boîtier dans ce support tandis que les dents 35 empêchent tout mouvement du boîtier 30 hors du support 32 en s'arcboutant contre les parois de l'étage 47.

Ainsi, le moteur électrique pas à pas 30 est maintenu transversalement et axialement dans son support 32.

A cet effet, suivant l'invention, l'organe du type précité est caractérisé en ce que le contour de l'ensemble des dents est de forme sensiblement polygonale à sommets saillants, l'âme étant dans le prolongement des dents de sorte que l'âme et les dents sont inscrites dans le même cône.

## Revendications

1. Organe cylindrique (30) muni d'un dispositif de retenue axiale dudit organe (30) dans un alésage cylindrique (31) d'un support (32), dans lequel ledit organe (30) est destiné à être engagé, l'organe (30) comprenant au moins une portée (36, 37, 39) de guidage destinée à coopérer avec au moins un étage (44, 46, 48) de l'alésage (31) du support (32) pour immobiliser transversalement l'organe (30) dans le support (32), ledit dispositif de retenue axiale comportant une bague de retenue axiale (33) qui comprend une âme (34), et des dents de retenue (35), l'âme (34) étant montée solidaire de l'organe (30) et les dents (35), venues de matière avec l'âme (34), étant inscrites dans un cône convergent dans le sens d'engagement de l'organe (30) dans le support (32), et étant destinées à venir en appui élastique dans un étage (47) de l'alésage (31) afin d'immobiliser axialement l'organe (30) dans le support (32) et inhiber tout mouvement de l'organe (30) dans un sens contraire au sens d'engagement, l'âme (34) portant plusieurs dents (35) reliées les unes aux autres,
**caractérisé en ce que** le contour de l'ensemble des dents (35) est de forme sensiblement polygonale à sommets saillants, l'âme (34) étant dans le prolongement des dents (35) de sorte que l'âme (34) et les dents (35) sont inscrites dans le même cône.

2. Organe selon la revendication 1, **caractérisé en ce que** l'âme (34) est emmanchée sur l'organe (30).

3. Organe selon l'une des revendications 1 et 2, **caractérisé en ce que** l'organe (30) est étagé, à quatre étages, (36, 37, 38, 39) de diamètres successivement décroissants du premier (36) au quatrième (39) étage dans le sens d'engagement de l'organe (30) dans l'alésage (31), dans lequel il est destiné à être engagé, ledit alésage étant étagé à cinq étages(44, 45, 46, 47, 48) à diamètres successivement décroissants du premier (44) au cinquième (48) étage, depuis une extrémité d'entrée (49) du support (32) jusqu'à un fond (50) dudit support (32).

4. Organe selon la revendication 3, **caractérisé en ce que** les premier (36) et quatrième (39) étages de l'organe (30) portent extérieurement des dents d'accrochage (40, 41) destinées à coopérer avec l'alésage (31) de support (32), de sorte qu'au montage les dents (40, 41) respectivement du premier (36) et du quatrième (39) étages de l'organe (30) coopèrent à frottement avec respectivement les premier (44) et cinquième (48) étages de l'alésage (31) du support (32).

5. Organe selon l'une des revendications 3 et 4, **caractérisé en ce que** le deuxième étage (37) de l'organe (30) supporte un joint torique (43) destiné à assurer l'étanchéité de l'organe (30) dans l'alésage (31) après mise en place dudit organe (30) dans l'alésage (31) du support (32), ledit joint torique (43) étant alors écrasé contre le deuxième étage (45) dudit alésage (31) tandis que les dents (35) de la bague (33) sont rabattues élastiquement en direction de l'axe (Y-Y) commun à l'organe (30) et à l'alésage (31) en venant frotter contre le quatrième étage (47) dudit alésage (31).

6. Organe selon l'une quelconque des revendications 1 à 5, **caractérisé en ce que** l'organe (30) est un potentiomètre destiné à être retenu axialement sur ledit support (32) qui est un corps papillon de moteur pour véhicule automobile.

7. Organe selon l'une quelconque des revendications 1 à 5, **caractérisé en ce que** l'organe (30) est un boîtier d'un moteur électrique pas-à-pas.

## Claims

1. Cylindrical element (30) with a device for axially maintaining it within a cylindrical bore (31) of a support (32), in which the said element (30) is intended to be engaged, wherein the element (30) has at least one guiding surface (36, 37, 39) intended to co-operate with at least one stage (44, 46, 48) of the bore (31) of the support (32) in order to transversally immobilise the element (30) in the support (32) wherein the said axial maintaining device (1) has an axial maintaining ring (33) which has a core (34) and maintaining teeth (35) wherein the core (34) is mounted as part of the element (30) and the teeth (35) which are made from the substance of the core (34) are inserted in a cone converging in the direction of engagement of the element (30) in the support (32) and are intended to provide elastic support in a stage (47) of the bore (31) in order to axially immobilise the element (30) in the support (32) and to inhibit any movement of the element (30) in a contrary direction to the direction of engagement wherein the core (34) has several teeth (35) which are connected to each other,
**characterised in that** the contour of all the teeth (35) is of an essentially polygonal form with projecting peaks wherein the core (34) is in the prolongation of the teeth (35) in such a way that the core (34) and the teeth (35) are inserted in the same cone.

2. Element according to claim 1, **characterised in that** the core (34) is mounted on the element (30).

3. Element according to one of the claims 1 and 2, **characterised in that** the element (30) is staged with four stages (36, 37, 38, 39) with successively decreasing diameters from the first (36) to the fourth (39) stage in the direction of engagement of the element (30),in the bore (31) in which it is intended to be engaged, wherein the said bore is staged with five stages (44, 45, 46, 47, 48) with successively decreasing diameters from the first (44) to the fifth (48) stage from an entry end (49) of the support (32) as far as the bottom (50) of the said support (32).

4. Element according to claim 3, **characterised in that** the first (36) and fourth (39) stages of the element (30) have on their exterior locking teeth (40, 41) intended to co-operate with the bore (31) of the support (32) in such a way that during assembly the teeth (40, 41) respectively of the first (36) and the fourth (39) stages of the element (30) co-operate through friction respectively with the first (44) and fifth (48) stages of the bore (31) of the support (32).

5. Element according to one of the claims 3 and 4, **characterised in that** the second stage (37) of the element (30) supports an O-ring (43) intended to ensure sealing of the element (30) in the bore (31) after the said element (30) has been placed in the bore (31) of the support (32) wherein the said O-ring (43) is thus pressed against the second stage (45) of the said bore (31) whereas the teeth (35) of the ring (33) are elastically folded back in the direction of the axis (Y-Y) common to the element (30) and to the bore (31) and rub against the fourth stage (47) of the said bore (31).

6. Element according to one of the claims 1 to 5, **characterised in that** the element (30) is a potentiometer intended to be axially maintained on the said support (32) which is a motor butterfly element for a motor car.

7. Element according to one of the claims 1 to 5, **characterised in that** the element (30) is the housing of an electric stepper motor.

## Patentansprüche

1. Zylindrisches Element (30), das mit einer Vorrichtung zum axialen Halten des Elements (30) in einer zylindrischen Bohrung (31) eines Trägers (32) versehen ist, in der das Element (30) in Eingriff gebracht werden soll, wobei das Element (30) mindestens eine Führungsauflagefläche (36, 37, 39) aufweist, die mit mindestens einer Stufe (44, 46, 48) der Bohrung (31) des Trägers (32) dahingehend zusammenwirken soll, das Element (30) im Träger (32) in Querrichtung festzulegen, wobei die Vorrichtung zum axialen Halten einen Ring (33) zum axialen Halten aufweist, der einen Mittelteil (34) und Haltezähne (35) aufweist, wobei der Mittelteil (34) fest mit dem Element (30) verbunden ist und sich die mit dem Mittelteil (34) einstückig ausgebildeten Zähne (35) in einem Kegel befinden, der in Eingriffsrichtung des Elements (30) in den Träger (32) konvergiert und in einer Stufe (47) der Bohrung (31) elastisch in Anlage kommen sollen, um das Element (30) axial im Träger (32) festzulegen und jegliche Bewegung des Elements (30) in einer der Eingriffsrichtung entgegengesetzten Richtung zu verhindern, wobei der Mittelteil (34) mehrere miteinander verbundene Zähne (35) aufweist,
**dadurch gekennzeichnet, dass** die Kontur der Anordnung der Zähne (35) eine im Wesentlichen polygonale Form mit vorragenden Scheiteln aufweist, wobei sich der Mittelteil (34) in der Verlängerung der Zähne (35) befindet, so dass sich der Mittelteil (34) und die Zähne (35) im gleichen Kegel befinden.

2. Element nach Anspruch 1, **dadurch gekennzeichnet, dass** der Mittelteil (34) auf dem Element (30) aufgeschoben ist.

3. Element nach Anspruch 1 oder 2, **dadurch gekennzeichnet, dass** das Element (30) in vier Stufen (36, 37, 38, 39) mit in Eingriffsrichtung des Elements (30) in die Bohrung (31), in der es in Eingriff gebracht werden soll, von der ersten (36) zur vierten (39) Stufe nacheinander abnehmenden Durchmessern abgestuft ist, wobei die Bohrung in fünf Stufen (44, 45, 46, 47, 48) mit von einem Eingangsende (49) des Trägers (32) bis zum Grund (50) des Trägers (32) von der ersten (44) zur fünften (48) Stufe nacheinander abnehmenden Durchmessern abgestuft ist.

4. Element nach Anspruch 3, **dadurch gekennzeichnet, dass** die erste (36) und die vierte (39) Stufe des Elements (30) außen Befestigungszähne (40, 41) aufweisen, die so mit der Bohrung (31) des Trägers (32) zusammenwirken sollen, dass die Zähne (40, 41) der ersten (36) bzw. der vierten (39) Stufe des Elements (30) bei der Montage durch Reibung mit der ersten (44) bzw. der fünften (48) Stufe der Bohrung (31) des Trägers (32) zusammenwirken.

5. Element nach Anspruch 3 oder 4, **dadurch gekennzeichnet, dass** die zweite Stufe (37) des Elements (30) einen O-Ring (43) stützt, der die Dichtigkeit des Elements (30) in der Bohrung (31) nach Anordnung des Elements (30) in der Bohrung (31) des Trägers (32) gewährleisten soll, wobei der O-Ring (43) dann gegen die zweite Stufe (45) der Bohrung (31) flachgedrückt wird, während die Zähne (35) des Rings (33) elastisch in Richtung der dem Element (30) und der Bohrung (31) gemeinen Achse (Y-Y) umgeklappt werden und an der vierten Stufe (47) der Bohrung (31) reiben.

6. Element nach einem der Ansprüche 1 bis 5, **dadurch gekennzeichnet, dass** das Element (30) ein Potentiometer ist, das axial am Träger (32) gehalten werden soll, bei dem es sich um einen Motordrosselklappenstutzen für ein Kraftfahrzeug handelt.

7. Element nach einem der Ansprüche 1 bis 5, **dadurch gekennzeichnet, dass** das Element (30) ein Gehäuse eines elektrischen Schrittmotors ist.
